Europäisches Patentamt

European Patent Office

Office européen des brevets

(11) Veröffentlichungsnummer: **0 487 141 A2**

## EUROPÄISCHE PATENTANMELDUNG

(21) Anmeldenummer: **91202954.3**

(51) Int. Cl.⁵: **F04D 25/06**, H02K 7/14

(22) Anmeldetag: **14.11.91**

(30) Priorität: **23.11.90 DE 4037229**

(43) Veröffentlichungstag der Anmeldung:
**27.05.92 Patentblatt 92/22**

(84) Benannte Vertragsstaaten:
**DE FR GB SE**

(71) Anmelder: **Philips Patentverwaltung GmbH
Wendenstrasse 35 Postfach 10 51 49
W-2000 Hamburg 1(DE)**

(84) DE

(71) Anmelder: **N.V. Philips' Gloeilampenfabrieken**

Groenewoudseweg 1
NL-5621 BA Eindhoven(NL)

(84) FR GB SE

(72) Erfinder: **Bolte, Ekkehard, Dr.-Ing.
Am Schaafweg 9
W-5100 Aachen(DE)**

(74) Vertreter: **Kupfermann, Fritz-Joachim,
Dipl.-Ing. et al
Philips Patentverwaltung GmbH
Wendenstrasse 35 Postfach 10 51 49
W-2000 Hamburg 1(DE)**

(54) **Gebläseaggregat zum Erzeugen von Gasströmen.**

(57) Die Erfindung bezieht sich auf ein Gebläseaggregat zum Erzeugen von Gasströmen, insbesondere für Staubsauger, mit einem Motor (4) und einem Verdichter-Laufrad (1), das gleichzeitig elektromagnetisch wirksam ist und zusammen mit elektromagnetisch aktiven Teilen (19) des Motor-Ständers (3) das Drehmoment des Verdichter-Laufrades über einen zwischen Radialflächen des Verdichter-Laufrades und des Motor-Ständers gebildeten Luftspalt (11) erzeugt, wobei zum elektromagnetisch wirksamen Teil des Verdichter-Laufrades (1) eine in einer Radialebene angeordnete, leitfähige Platte (7) gehört, die mit einer Radialfläche (8) den Luftspalt (11) läuferseitig begrenzt, und wobei ständerseitig flächige Ständerpole (19) den Luftspalt begrenzen, die aus einer radialen Endfläche (12) einer Eisenhülse (15) herausgearbeitet sind durch das Vorsehen von radial angebrachten Nuten (17), in die Spulen (20) gewickelt sind.

FIG.1

Die Erfindung bezieht sich auf ein Gebläseaggregat zum Erzeugen von Gasströmen, insbesondere für Staubsauger, mit einem Motor und einem Verdichter-Laufrad, das gleichzeitig elektromagnetisch wirksam ist und zusammen mit elektromagnetisch aktiven Teilen des Motor-Ständers das Drehmoment des Verdichter-Laufrades über einen zwischen Radialflächen des Verdichter-Laufrades und des Motor-Ständers gebildeten Luftspalt erzeugt.

Aus der CH-PS 612 736 ist ein Kleinstlüfter bekannt, bei dem ein Lüfterrad mit in Radialrichtung wirkenden Schaufeln versehen ist. Außerdem ist das Lüfterrad am Luftspalt mit Dauermagneten ausgerüstet, die in Umfangsrichtung längs des Luftspaltes Pole wechselnder Polarität ausbilden. Den in einer Radialebene angeordneten dauermagnetischen Polen des Läufers liegen am Luftspalt in Radialebenen angeordnete, von Spulen erregbare Pole des Ständers gegenüber. Beim Erregen der Spulen bilden sich im Luftspalt elektrische Felder aus, die auf den Läufer ein Drehmoment ausüben.

Diese Konstruktion ist aufwendig, da sie zusätzlich zum Lüfterrad Permanentmagnete benötigt. Prinzipbedingt muß für die Bestromung der Spulen die Position des Lüfterrades detektiert werden. Die Verwendung der Permanentmagnete in der gezeigten Form begrenzt zudem die maximale Drehzahl und die Temperatur auf Werte, die das Einsatzgebiet einschränken.

Da bei Staubsaugern die aufgenommene Leistung heute noch ein typisches Indiz für die Wirksamkeit des Staubsaugers ist, werden bedingt effiziente Komplett-Motoren in Staubsaugern eingesetzt, die ein ebenfalls komplettes Verdichter-Laufrad antreiben. Das Einbauvolumen eines derartigen Aggregates aus Verdichter und Motor ist allgemein relativ groß. In letzter Zeit gehen die Hersteller dazu über, außer der Leistungsaufnahme des Gerätes auch dessen Saugleistung an der Düse anzugeben. Dabei stehen die Hersteller dann vor dem Problem, daß der schlechte Wirkungsgrad der Aggregate zutage tritt. Dies ist besonders von Bedeutung bei batteriegetriebenen Geräten.

Nachteilig ist bei den gebräuchlichen Staubsaugern auch, daß der getrennte Aufbau von Verdichter und Motor einer Miniaturisierung des Gerätes entgegensteht. Bei einer Drehzahl in der Größerordnung von 25.000 U/min gibt es eine deutliche Geräuschentwicklung, die wesentlich von den Bürsten der verwendeten Universalmotoren verursacht wird. Der schlechte Wirkungsgrad der heute eingesetzten Aggregate führt zu einer starken Motorerwärmung. Um diese Verlustwärme abzuführen, wird der Saugluftstrom durch den Motor oder über den Motor hinweg geführt. Dies führt zu zusätzlichen Strömungsgeräuschen und Strömungsverlusten.

Es ist Aufgabe der Erfindung, ein Gebläseaggregat zu schaffen, das geräuschärmer und effizienter arbeitet und das darüber hinaus miniaturisierbar ist.

Die gestellte Aufgabe ist gemäß der Erfindung dadurch gelöst, daß der elektromagnetisch wirksame Teil des Verdichter-Laufrades eine in einer Radialebene angeordnete, leitfähige Platte ist, die den Luftspalt läuferseitig begrenzt, und daß ständerseitig flächige Ständerpole den Luftspalt begrenzen, die aus einer radialen Endfläche einer Eisenhülse herausgearbeitet sind durch das Vorsehen von radial eingebrachten Nuten, in die Spulen gewickelt sind.

Bei einem derartigen Aggregat kann das Verdichter-Laufrad auf übliche Weise gelagert werden, und das Laufrad selbst kann, wie bisher, durch leitfähige Radialplatten axial begrenzt werden. Funktional unterschiedlich ist, daß eine der Radialplatten des Lüfterrades als Wirbelstromplatte des Axialfluß-Induktionsmotors wirkt, wobei der Wirbelstrom von den Polflächen des Ständers erzeugt wird. Der Ständer als ortsfestes Teil kann mit der Lagerhalterung des Verdichter-Laufrades kombiniert sein. Auf diese Weise läßt sich das Antriebsaggregat eines Staubsaugers deutlich miniaturisieren.

Nach einer weiteren Ausgestaltung der Erfindung ist vorgesehen, daß die Eisenhülse aus einem Eisenbandwickel besteht. Eine derartige Eisenhülse kann mit von einer Bandseite her eingeprägten Nuten exakt gewickelt werden, so daß Schwierigkeiten bei der Nutung nach Herstellung des Wikkels entfallen.

Nach einer weiteren Ausgestaltung der Erfindung ist vorgesehen, daß die elektrisch und gegebenenfalls auch magnetisch leitfähige Platte des Läufers eine Basisplatte des Verdichterlaufrades ist. Bei einer derartigen Ausbildung wird das Laufrad des Verdichters unmittelbar als Läufer des Motors eingesetzt.

Nach einer weiteren Ausgestaltung der Erfindung ist vorgesehen, daß die elektrisch leitfähige Platte aus Aluminium besteht. Da das Laufrad eines Verdichters bereits allgemein aus Aluminium besteht, ist nur eine Dickenanpassung an die Erfordernisse der Krafterzeugung nötig. Die Eigenschaften des Aluminiums, hohe mechanische Festigkeit, geringes spezifisches Gewicht und hohe elektrische Leitfähigkeit zu vereinen, werden gut genutzt.

Nach einer weiteren Ausgestaltung der Erfindung ist vorgesehen, daß die elektrisch leitfähige Platte des Läufers auf ihrer vom Luftspalt abgelegenen Seitenfläche mit einer Platte aus hochpermeablem Werkstoff hinterlegt ist. In Weiterbildung dieser Ausgestaltung besteht die Platte aus hochpermeablem Werkstoff aus Eisen.

Eine weitere Ausgestaltung der Erfindung sieht vor, daß zur Wirbelstromunterdrückung die magnetisch leitfähig ausgebildete hinterlegte Platte aus einem gewickelten Elektroblechband besteht. Die Leitstungsfähigkeit des Motors wird dadurch weiter verbessert.

Nach einer weiteren Ausgesteltung der Erfindung ist vorgesehen daß die Basisplatte des Verdichterlaufrades aus massivem Eisen besteht. Diese Platte verbindet elektrische und magnetische Leitfähigkeit.

Eine Verbesserung der Motorleistung ist auch dadurch möglich, daß die äußeren und inneren Ränder der kreisringförmigen, massiv eisernen Basisplatte des Laufrades mit Teilen aus hochleitfähigem Werkstoff in Kontakt stehen, wobei die Teile aus hochleitfähigem Werkstoff als Kupferringe ausgebildet sein können.

Nach einer weiteren Ausgestaltung der Erfindung ist vorgesehen, daß die elektrisch leitfähige Platte des Verdichter-Laufrades als Kurzschlußkäfig in massivem permeablem oder lamelliertem permeablem Material besteht.

Nach einer weiteren Ausgestaltung der Erfindung ist vorgesehen, daß der Axialfluß-Induktionsmotor mittels eines Frequenzumrichters gespeist wird, wobei die Drehzahlstellung von prozeßabhängigen Sollwerten und einstellbaren Stellgrößen abgeleitet wird. Auf diese Weise ist es möglich, die Arbeitsdrehzahl des Motors auf 25.000 bis 50.000 U/min zu erhöhen. Die hohe Arbeitsdrehzahl bietet die Möglichkeit, den Turbinenwirkungsgrad zu steiern. Die Stellmöglichkeiten erlauben, die Saugleistung optimal dem Bedarf anpassen zu können. Darüber hinaus kann mittels zusätzlicher Drucksensoren eine Regelung realisiert werden.

Nach einer weiteren Ausgestaltung der Erfindung ist vorgesehen, daß die Stellgrößen die Primärfrequenz und der Statorstrom oder die Statorspannung sind. Ebenso ist nach einer weiteren Ausgestaltung vorgesehen, daß der Drehzahl-Istwert eine Meßgröße ist oder aus elektrischen Größen des Motors ermittelt wird. Durch eine derartige Auswertung der Funktionsabläufe innerhalb des Axialfluß-Induktionsmotors kann auf mechanische oder elektrische Fühler verzichtet werden.

Die Erfindung wird anhand der Zeichnung näher erläutert. Es zeigen:

Fig. 1 ein Gebläseaggregat mit einem Verdichterlaufrad, das zugleich Läufer eines Axialfluß-Induktionsmotors ist, und den zugehörigen Stator schaubildlich in Explosionsansicht,

Fig. 2a ein Schnittbild durch das Gebläseaggregat

Fig. 2b eine Vorderansicht des unbewickelten Statorblechpaketes,

Fig. 3 ein Blockschaltbild der Speisung und Steuerung des Axialfluß-Induktionsmotors in dem Gebläseaggregat nach Fig 1.

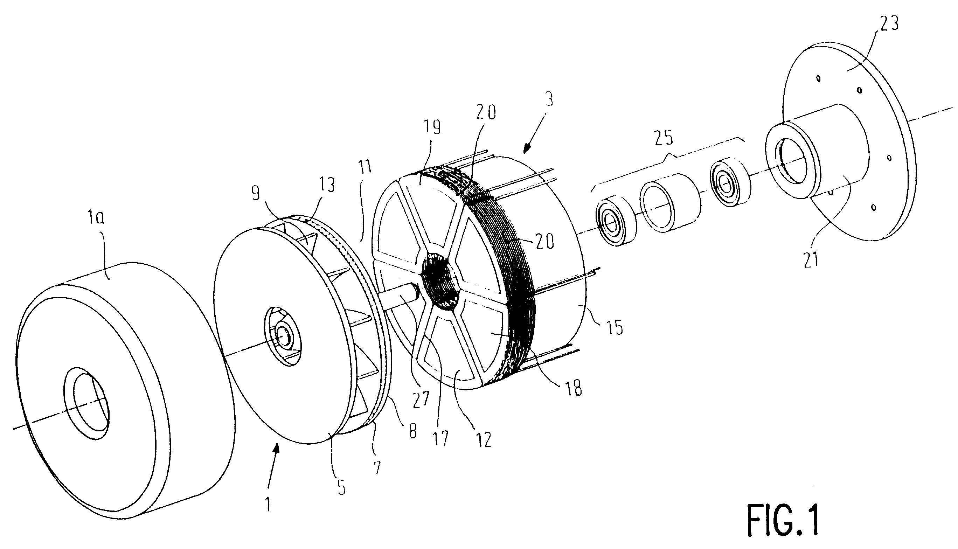

Das in Fig. 1 in Explosionsansicht dargestellte Gebläseaggregat besteht aus einem Verdichterlaufrad 1 mit einem Gehäuse 1a und einem Ständer 3 eines Axialfluß-Induktionsmotors 4. Das Verdichterlaufrad 1 besteht im dargestellten Ausführungsbeispiel aus zwei parallelen Aluminiumscheiben 5 und 7, zwischen denen sich Lüfterflügel 9 befinden. Die Aluminiumscheibe 7 wird als Wirbelstromrotor des Axialfluß-Induktionsmotors eingesetzt, zu dem der Ständer 3 gehört. Die als Basisplatte des Verdichterlaufrades 1 wirkende Scheibe 7 liegt deshalb bei in Betriebslage befindlichem Verdichterlaufrad 1 und Ständer 3 mit einer Radialfläche 8 am Luftspalt 11 des Axialfluß-Induktionsmotors.

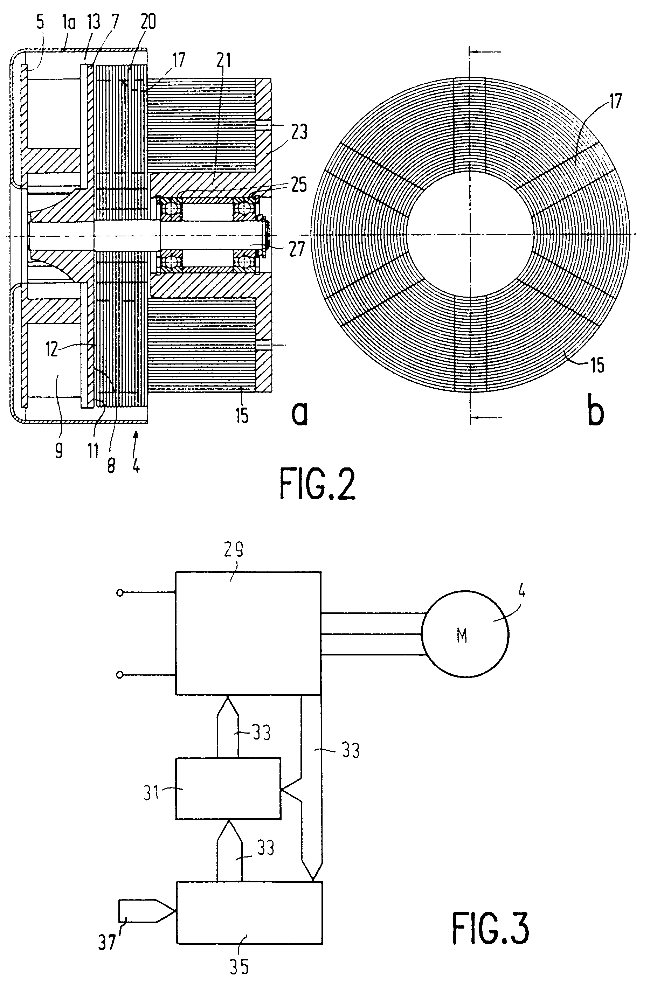

Bei dem Ausführungsbeispiel nach Fig. 1, 2a und 2b ist die Scheibe 7 auf ihrer vom Luftspalt 11 abgelegenen Seitenfläche mit einer Platte 13 aus hochpermeablem Werkstoff, vorzugsweise aus massivem Eisen oder aus gewickeltem Elektroblech hinterlegt. Damit weist das Verdichterlaufrad am Luftspalt 11 eine elektrisch leitfähige Schicht 7 und dahinter eine magnetisch leitfähige Schicht 13 auf. Die magnetisch leitfähige Schicht bildet dabei die Platte 13 aus massivem Eisen. Zur Wirbelstromunterdrückung ist es aber auch möglich, die Scheibe 13 aus einem aufgewickelten Elektroblechband zu bilden.

Bei einem nicht dargestellten Ausführungsbeispiel ist auf die Aluminiumscheibe 7 verzichtet. Die massiveiserne Scheibe 13 ist dann als Sekundärteil für den Motor wirksam. Die so entstandene Ausführungsform kann noch modifiziert werden, indem die äußeren und inneren Ränder der kreisförmigen, massiveisernen Eisenplatte 13 mit nicht dargetellten Kupferringen kontaktiert sind. Dadurch wird der elektrisch wirksame Sekundärwiderstand reduziert.

Der Stator 3 besteht aus einer Eisenhülse 15 (Fig. 2a und 2b), die durch Wickeln eines Elektroblechstreifens gebildet ist. Von einer am Luftspalt 11 liegenden radialen Endfläche 12 her sind in die Hülse Nuten 17 eingebracht, die zwischen sich Ständerpole 18 ausbilden. Diese Ständerpole 18 enden am Luftspalt 11 mit radialen Polflächen 19. Bei dem Ausführungsbeispiel sind sechs Spulen 20 in sechs Nuten 17 eingelegt. Die Spulen 20 werden zu einer ein- oder mehrsträngigen Wicklung verschaltet. Auch andere als die dargestellte Wicklung können ausgeführt werden. Darüber hinaus kann leistungsabhängig auch eine andere Nutenzahl verwendet werden, mit dann angepaßter Wicklungsausführung.

Die Eisenhülse 15 ist auf eine Traghülse 21 einer Sockelplatte 23 aufgesetzt. In der Traghülse 21 befindet sich ein Lager 25 für eine Laufradwelle 27.

Fig. 3 zeigt eine Steuerung für den Axialfluß-Induktionsmotor 4 nach Fig. 1. Es ist ein Frequenzumrichter 29 vorgesehen, der die Wicklung des Motors 4 speist. Die Drehzahlstellung wird dabei von prozeßabhängigen Sollwerten und einstellbaren Stellgrößen abgeleitet. Es ist ein Signalformer 31 vorgesehen, der Stell- oder Istgrößen in Form der Primärfrequenz sowie des Statorstromes oder der Statorspannung über Leitungen 33 zugeführt erhält.

Weiterhin ist es möglich, eine Drehzahlstellung und/oder eine Leistungsstellung von prozeßabhängigen Sollwerten und Stellgrößen abzuleiten. Im Prozeßregler 35 können Istwerte, z. B. für Drehzahl und Saugleistung, aus elektrischen Größen ermittelt werden. Der Drehzahl-Sollwert kann am Prozeßregler 35 beispielsweise mittels eines von Hand bedienbaren Stellgliedes 37 vorgegeben werden; auch kann er von einem Prozeßsensor abgeleitet werden.

**Patentansprüche**

1. Gebläseaggregat zum Erzeugen von Gasströmen, insbesondere für Staubsauger, mit einem Motor (4) und einem Verdichter-Laufrad (1), das gleichzeitig elektromagnetisch wirksam ist und zusammen mit elektromagnetisch aktiven Teilen (19) des Motor-Ständers (3) das Drehmoment des Verdichter-Laufrades über einen zwischen Radialflächen des Verdichter-Laufrades und des Motor-Ständers gebildeten Luftspalt (11) erzeugt, dadurch gekennzeichnet, daß der elektromagnetisch wirksame Teil des Verdichter-Laufrades (1) eine in einer Radialebene angeordnete, leitfähige Platte (7) ist, die mit einer Radialfläche (8) den Luftspalt (11) läuferseitig begrenzt, und daß ständerseitig flächige Ständerpole (19) den Luftspalt begrenzen, die aus einer radialen Endfläche (12) einer Eisenhülse (15) herausgearbeitet sind durch das Vorsehen von radial angebrachten Nuten (17), in die Spulen (20) gewickelt sind.

2. Gebläseaggregat nach Anspruch 1, dadurch gekennzeichnet, daß die Eisenhülse (15) aus einem Eisenbandwickel besteht.

3. Gebläseaggregat nach Anspruch 1, dadurch gekennzeichnet, daß die elektrisch oder magnetisch leitfähige Platte (7) des Läufers eine Basisplatte des Verdichterlaufrades ist.

4. Gebläseaggregat nach Anspruch 3, dadurch gekennzeichnet, daß die elektrisch leitfähige Basisplatte (7) aus Aluminium besteht.

5. Gebläseaggregat nach Anspruch 1, dadurch gekennzeichnet, daß die elektrisch leitfähige Basisplatte (7) des Läufers auf ihrer vom Luftspalt abgelegenen Seitenfläche mit einer Platte (13) aus hochpermeablem Werkstoff hinterlegt ist.

6. Gebläseaggregat nach Anspruch 5, dadurch gekennzeichnet, daß die hinterlegte Platte (13) aus massivem Eisen besteht.

7. Gebläseaggregat nach Anspruch 6, dadurch gekennzeichnet, daß zur Wirbelstromunterdrückung die magnetisch leitfähig ausgebildete hinterlegte Platte (13) aus einem gewickelten Elektroblechband besteht.

8. Gebläseaggregat nach Anspruch 3, dadurch gekennzeichnet, daß die Basisplatte (7) des Verdichterlaufrades (1) aus massivem Eisen besteht.

9. Gebläseaggregat nach Anspruch 8, dadurch gekennzeichnet, daß die äußeren und inneren Ränder der kreisringförmigen, massiv-eisernen Eisenplatte (7) mit Teilen aus hochleitfähigem Werkstoff in Kontakt stehen.

10. Gebläseaggregat nach Anspruch 9, dadurch gekennzeichnet, daß die Teile aus hochleitfähigem Werkstoff als Kupferringe ausgebildet sind.

11. Gebläseaggregat nach Anspruch 1, dadurch gekennzeichnet, daß die elektrisch und/oder magnetisch leitfähige Platte (7) des Verdichter-Laufrades (1) als Kurzschlußkäfig in massivem permeablem oder lamelliertem permeablem Material besteht.

12. Gebläseaggregat nach Anspruch 1, dadurch gekennzeichnet, daß der Axialfluß-Induktionsmotor (4) mittels eines Frequenzumrichters (29) gespeist wird, wobei die Drehzahlstellung von prozeßabhängigen Sollwerten und einstellbaren Stellgrößen abgeleitet wird.

13. Gebläseaggregat nach Anspruch 12, dadurch gekennzeichnet, daß die Stellgrößen die Primärfrequenz und der Statorstrom oder die Statorspannung sind.

14. Gebläseaggregat nach Anspruch 12, dadurch gekennzeichnet, daß der Drehzahl-Istwert eine Meßgröße ist oder aus elektrischen Größen ermittelt wird.

FIG.1

EP 0 487 141 A2

FIG.2

FIG.3